(19) Europäisches Patentamt
European Patent Office
Office européen des brevets

(11) **EP 2 747 420 A2**

(12) **DEMANDE DE BREVET EUROPEEN**

(43) Date de publication:
**25.06.2014 Bulletin 2014/26**

(51) Int Cl.:
*H04N 5/262* (2006.01)  *H04N 13/00* (2006.01)

(21) Numéro de dépôt: **13198476.7**

(22) Date de dépôt: **19.12.2013**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **21.12.2012 FR 1203584**

(71) Demandeur: **Thales**
**92200 Neuilly Sur Seine (FR)**

(72) Inventeurs:
• **Bergeron, Cyril**
**92622 GENNEVILLIERS CEDEX (FR)**
• **Leny, Marc**
**95240 CORMEILLES EN PARISIS (FR)**

(74) Mandataire: **Blot, Philippe Robert Emile**
**Cabinet Lavoix**
**2, place d'Estienne d'Orves**
**75441 Paris Cedex 09 (FR)**

(54) **Procédé de compensation de mouvement sur plusieurs séquences d'images**

(57) Ce procédé de compensation, sur plusieurs séquences d'images d'une même scène, du mouvement différentiel entre plusieurs caméras soumises à un même mouvement global par rapport à la scène, comprend les étapes de :
- prendre (102A, 102B) plusieurs séquences d'images brutes d'une même scène,
- calculer (103A, 103B) un mouvement propre ($Mvt_i$) à chaque séquence d'images par rapport à la caméra le produisant,
- calculer (110) un mouvement global ($Mvt_{global}$) pour les caméras à partir des séquences d'images,
- calculer (110) un mouvement résiduel ($\Delta Mvt_i$) pour chaque caméra à partir du mouvement propre ($Mvt_i$) et du mouvement global ($Mvt_{global}$), et
- corriger (112A, 112B) chaque séquence d'images du mouvement résiduel ($\Delta Mvt_i$) par rapport à la caméra ayant pris les images.

FIG.4

EP 2 747 420 A2

**Description**

La présente invention concerne un procédé de compensation, sur plusieurs séquences d'images d'une même scène, du mouvement différentiel entre plusieurs caméras, soumises à un même mouvement global par rapport à la scène.

De nos jours, il est connu de mettre à disposition d'un observateur des images vidéos tridimensionnels (stéréoscopiques) produites à partir de deux images de la même scène prises par deux caméras séparées d'une longueur prédéterminée.

En particulier, deux caméras observant une même scène peuvent être placées sur un aéronef, tel qu'un avion piloté ou un avion sans pilote couramment désigné par drone.

Les séquences d'images produites par ces deux caméras sont traitées et mises à disposition d'un observateur, tel qu'un personnel militaire, pour prendre connaissance de la scène observée. Les deux caméras étant mobiles par rapport à la scène observée, on constate une perte de qualité du rendu visuel, même si chaque séquence d'images est stabilisée par un algorithme connu en soi de stabilisation d'images.

Le rendu visuel, connu sous l'expression QoE pour Quality of Experience peut, lorsqu'il est dégradé, être à l'origine de maux de tête pour l'observateur et l'interprétation des images est même parfois impossible pour le cerveau humain.

L'invention a pour but de permettre une amélioration de la qualité de rendu visuel de séquences d'images issues de caméras distinctes observant une même scène en mouvement. Elle sera ici décrite dans le cas de la stéréoscopie pour faciliter la compréhension, mais est applicable à un réseau de caméras (a priori embarquées sur un même support rigide, même si l'unicité du support n'est pas requise par le procédé) filmant une même scène, quel qu'en soit le nombre. En dehors d'une meilleure interprétation de l'environnement 3D lié à l'usage d'une vidéo stéréoscopique, la compensation de mouvement décrite par l'invention permet aussi d'obtenir une meilleure compression de vidéo multivues en facilitant la prédiction inter-vues.

A cet effet, l'invention a pour objet un procédé de compensation sur deux séquences d'images d'une même scène, du mouvement différentiel entre deux caméras, caractérisé en ce qu'il comprend les étapes suivantes :

- prendre plusieurs séquences d'images brutes d'une même scène,
- calculer un mouvement propre à chaque séquence d'images par rapport à la caméra le produisant,
- calculer un mouvement global pour les caméras à partir des séquences d'images,
- calculer un mouvement résiduel pour chaque caméra à partir du mouvement propre et du mouvement global, et
- corriger chaque séquence d'images du mouvement résiduel à la caméra ayant pris les images.

Suivant des modes particuliers de mise en oeuvre, le procédé comporte l'une ou plusieurs des caractéristiques suivantes :

- ledit procédé comporte une étape de stabilisation image par image de chaque séquence d'images pour compenser des mouvements parasites des images et une étape de stabilisation des images lors de l'étape de correction du mouvement résiduel ;
- l'étape de stabilisation est mise en oeuvre sur les séquences d'images brutes avant les étapes de calcul du mouvement global et des mouvements résiduels, lesquelles étapes sont mises en oeuvre sur des images stabilisées ;
- lors de l'étape de calcul du mouvement global, le mouvement global est déterminé comme une estimation moyenne pondérée des mouvements des séquences d'images.
- lors de l'étape de calcul du mouvement résiduel, le mouvement résiduel est calculé comme la différence entre le mouvement propre et le mouvement global.

L'invention a également pour objet un dispositif de compensation sur plusieurs séquences d'images d'une même scène, du mouvement différentiel entre plusieurs caméras soumises à un même mouvement global par rapport à la scène, dans lequel le dispositif comprend :

- des moyens pour prendre plusieurs séquences d'images brutes d'une même scène ;
- des moyens pour calculer un mouvement propre à chaque séquence d'images par rapport à la caméra le produisant ;
- des moyens pour calculer un mouvement global pour les caméras à partir des séquences d'images ;
- des moyens pour calculer un mouvement résiduel pour chaque caméra à partir du mouvement propre et du mouvement global ; et
- des moyens pour corriger chaque séquence d'images du mouvement résiduel par rapport à la caméra ayant pris les images.

Suivant des modes de réalisation particuliers, le dispositif comporte l'une ou plusieurs des caractéristiques suivantes :

- ledit dispositif comporte des moyens de stabilisation image par image de chaque séquence d'images pour compenser des mouvements parasites des images et des moyens de stabilisation des images lors de la correction du mouvement résiduel ;
- les moyens de stabilisation sont mis en oeuvre sur les séquences d'images brutes avant le calcul du mouvement global et des mouvements résiduels, les calculs étant mis en oeuvre sur des images stabilisées ;
- les moyens de calcul du mouvement global sont propres à déterminer le mouvement global comme une estimation moyenne pondérée des mouvements des séquences d'images ; et
- les moyens de calcul du mouvement résiduel sont propres à déterminer le mouvement résiduel comme la différence entre le mouvement propre et le mouvement global.

L'invention sera mieux comprise à la lecture de la description qui va suivre, donnée uniquement à titre d'exemple et faite en se référant aux dessins sur lesquels :

- la figure 1 est une vue schématique d'un avion sans pilote équipé de deux caméras observant une même scène ;
- la figure 2 est une vue illustrant schématiquement deux images d'une même scène prise par les deux caméras liées ;
- la figure 3 est une vue identique à celle de la figure 1 dans une seconde position des caméras ;
- la figure 4 est un organigramme du procédé selon l'invention ; et
- la figure 5 est une vue schématique des deux images retraitées selon l'invention.

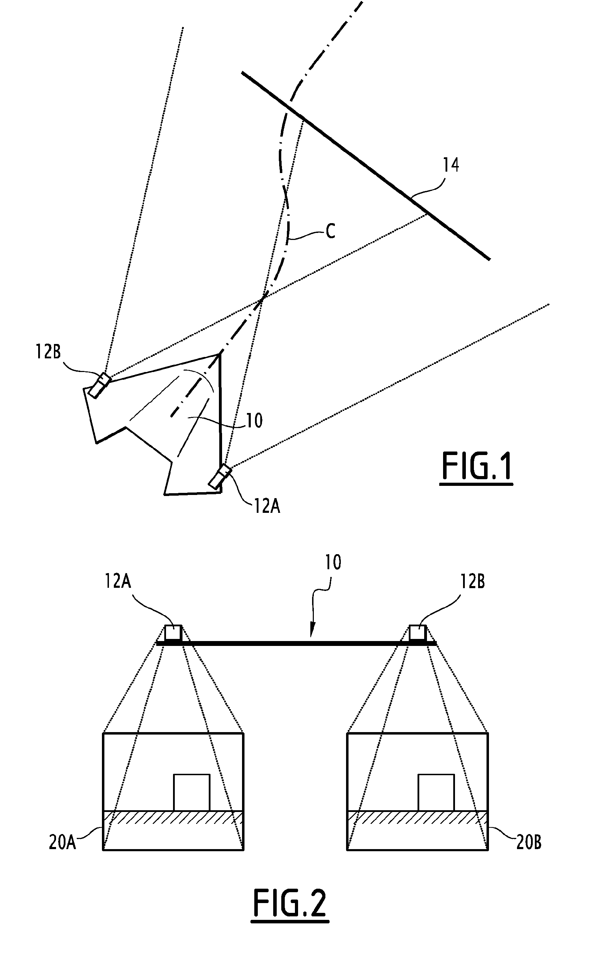

Sur la figure 1 est représenté un avion sans pilote 10 couramment désigné par drone. Cet avion présente deux ailes disposées de part et d'autre de son axe longitudinal. L'avion vole suivant une trajectoire C. L'avion est amené à basculer angulairement autour de son axe longitudinal lors des changements de la direction de déplacement.

L'avion porte à l'extrémité de chaque aile, une caméra 12A, 12B orientée pour prendre chacune une succession d'images d'une même scène 14 placée en avant de l'avion. Les deux caméras sont ainsi liées rigidement et leurs axes d'observation sont fixes l'un par rapport à l'autre.

L'avion comporte, comme connu en soi, un moyen de transmission des deux séquences d'images issues des deux caméras 12A, 12B vers une unité de traitement d'informations au sol, non représentée.

Cette unité de traitement d'informations comporte des moyens de mémorisation des deux séquences d'images, ainsi que des moyens de traitement de chaque image individuellement et de l'ensemble des images issues de ces deux séquences. Ces traitements sont mis en oeuvre par des programmes d'ordinateur.

Sur la figure 2 sont représentées deux images correspondantes 20A, 20B d'une même scène prises simultanément par les caméras respectivement 12A, 12B alors qu'elles sont dans une première proposition, par exemple, placées dans un même plan horizontal. On voit que les images 20A et 20B sont sensiblement identiques, celles-ci ne différant que par les angles d'observation très légèrement différents des deux caméras.

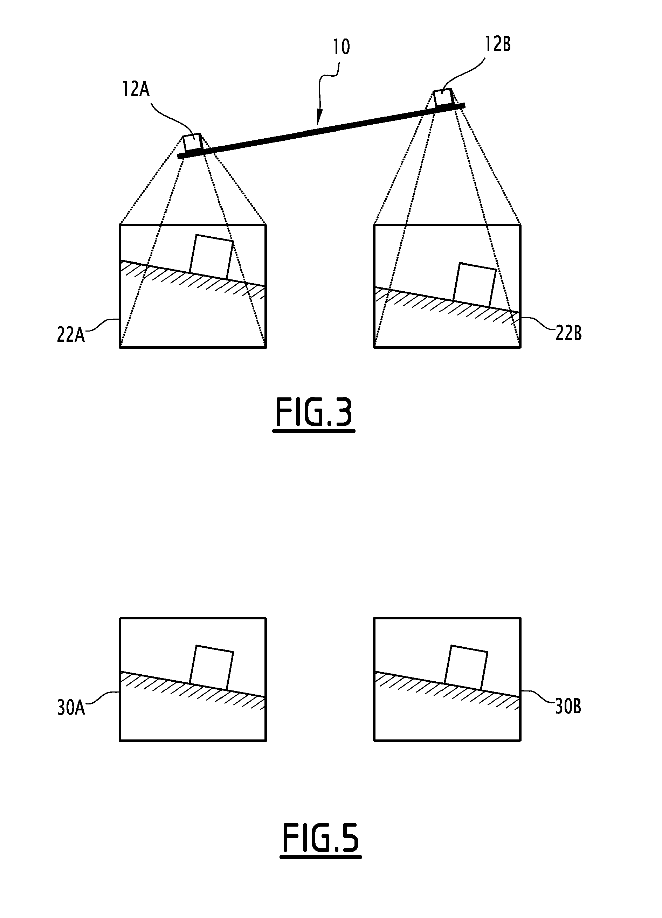

En revanche, et comme illustré sur la figure 3, lors d'un virage de l'avion 10, celui-ci se trouve basculé autour de son axe longitudinal médian avec par exemple la caméra 12A située au dessous de la caméra 12B. Les images observées notées respectivement 22A, 22B pour les caméras 12A et 12B sont alors décalées angulairement par rapport aux images 20A et 20B et le cadrage, notamment dans la verticale des deux images diffère du fait des différences de positions verticales entre les deux caméras 12A et 12B.

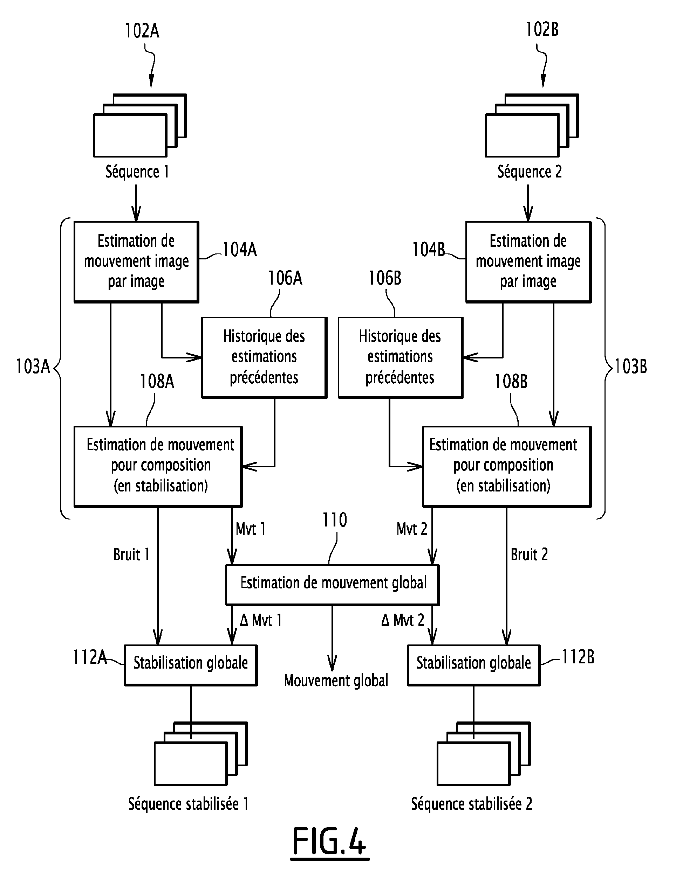

Les séquences d'images issues des deux caméras 12A, 12B sont traitées par un procédé dont l'algorithme est illustré sur la figure 4. Ce procédé est mis en oeuvre par un programme d'ordinateur mis en oeuvre par l'unité de traitement d'informations.

Initialement, pour chaque caméra 12A, 12B une étape 102A, 102B de prise d'images successives et de mémorisation des séquences d'images correspondantes est effectuée. Les images des deux séquences sont des images correspondant deux à deux d'une même scène observée par les caméras 12A, 12B, synchronisées temporellement.

Une phase 103A, 103B de stabilisation de chaque séquence d'images est effectuée pour compenser les vibrations des images.

Cette phase de stabilisation peut être mise en oeuvre séparément sur chaque séquence d'images par toute méthode connue adaptée, voire intégrée directement dans un schéma de stabilisation global intégrant la compensation intra- et inter-vues. Par exemple, cette phase comporte, pour chaque séquence, d'abord une étape 104A, 104B d'estimation du mouvement de la caméra par rapport à la scène image par image. L'historique des estimations de mouvement image par image est mémorisé aux étapes 106A, 106B. L'estimation du mouvement est effectuée par exemple par une méthode de flop optique, par « bloc matching » ou par point SIFT.

A partir de l'estimation du mouvement image par image et de l'historique mémorisé, une estimation du mouvement de stabilisation pour compenser le mouvement parasite est effectuée pour chaque séquence d'images aux étapes 108A, 108B.

Cette estimation du mouvement de stabilisation est effectuée par exemple par filtrage des mouvements hautes fréquences et basses fréquences des images. Le mouvement haute fréquence est considéré comme du bruit parasite devant être supprimé, alors que le mouvement basse fréquence est considéré comme le mouvement propre de la caméra par rapport à la scène. Ainsi, chaque étape d'estimation du mouvement de stabilisation 108A, 108B produit en sortie à la fois un mouvement propre noté $Mvt_1$ et $Mvt_2$ devant être conservé et un bruit noté $Bruit_1$ et $Bruit_2$ devant être compensé.

A partir des mouvements $Mvt_1$ et $Mvt_2$ de chaque caméra 12A, 12B par rapport à la scène observée, une estimation d'un mouvement global $Mvt_{global}$ des deux caméras est effectuée à l'étape 110. Le mouvement global est défini comme un mouvement moyen entre les mouvements propres $Mvt_1$ et $Mvt_2$ des deux caméras, ou plus généralement comme une moyenne pondérée du mouvement de chaque caméra pour un ensemble de caméras.

Par exemple, le mouvement global est pris égal au mouvement minimisant la fonction des moindres carrés :

$$\sum_{i=1}^{n} \frac{\left(Mvt_i - Mvt_{global}\right)^2}{n}$$

où n est le nombre de caméras filmant la même scène (2 dans le cas de la stéréoscopie).

L'étape d'estimation de mouvement global 110 produit également en sortie les mouvements résiduels notés $\Delta Mvt_1$ et $\Delta Mvt_2$ entre le mouvement global et le mouvement propre $Mvt_1$, $Mvt_2$ de chaque caméra pour la séquence d'images. Ces mouvements résiduels sont définis comme la différence entre le mouvement propre de la caméra par rapport à la scène et le mouvement global.

Ainsi,

$$\Delta Mvt_1 = Mvt_1 - Mvt_{global} \text{ et } \Delta Mvt_2 = Mvt_2 - Mvt_{global}.$$

La séquence d'images 102A et 102B sont ensuite compensées aux étapes 112A et 112B pour tenir compte du $Bruit_1$ respectivement $Bruit_2$ calculés aux étapes 108A, 108B et des mouvements résiduels par rapport au mouvement global calculés à l'étape 110.

Ainsi, chaque image des deux séquences se trouve compensée du $Bruit_1$ et $Bruit_2$ correspond augmenté du mouvement résiduel, c'est-à-dire d'un facteur $Bruit_i + \Delta Mvt_i$ pour la séquence i.

On conçoit qu'avec un tel algorithme, les séquences d'images ainsi compensées sont telles qu'illustrées sur la figure 5 par les vues 300A, 300B sur lesquels les objets de la scène sont situés au même niveau, même si comme illustré sur la figure 3, les caméras présentent entre elles un différentiel de niveau. Ceci est critique dans le cas de la stéréoscopie, pour laquelle le cerveau a besoin que les objets soient sur le même plan horizontal pour l'oeil gauche et le droit afin d'interpréter correctement la scène 3D.

Les images 3D produites à partir des séquences d'images ainsi compensées sont plus facilement interprétables par l'oeil humain, améliorant ainsi la qualité de rendu visuel et évitant les éventuels maux de tête.

## Revendications

1. Procédé de compensation, sur plusieurs séquences d'images d'une même scène, du mouvement différentiel entre plusieurs caméras soumises à un même mouvement global par rapport à la scène, lequel procédé comprend les étapes de :

    - prendre (1 02A, 102B) plusieurs séquences d'images brutes d'une même scène,
    - calculer (103A, 103B) un mouvement propre ($Mvt_i$) à chaque séquence d'images par rapport à la caméra le produisant,
    - calculer (110) un mouvement global ($Mvt_{global}$) pour les caméras à partir des séquences d'images,
    - calculer (110) un mouvement résiduel ($\Delta Mvt_i$) pour chaque caméra à partir du mouvement propre ($Mvt_i$) et du mouvement global ($Mvt_{global}$), et
    - corriger (112A, 112B) chaque séquence d'images du mouvement résiduel ($\Delta Mvt_i$) par rapport à la caméra ayant pris les images.

**2.** Procédé selon la revendication 1, **caractérisé en ce qu'**il comporte une étape (103A, 103B) de stabilisation image par image de chaque séquence d'images pour compenser des mouvements parasites des images et une étape (112) de stabilisation des images lors de l'étape de correction (112A, 112B) du mouvement résiduel.

**3.** Procédé selon la revendication 2, **caractérisé en ce que** l'étape de stabilisation (103A, 103B) est mise en oeuvre sur les séquences d'images brutes avant les étapes (110) de calcul du mouvement global ($Mvt_{global}$) et des mouvements résiduels ($\Delta Mvt_i$), lesquelles étapes sont mises en oeuvre sur des images stabilisées.

**4.** Procédé selon l'une quelconque des revendications précédentes, **caractérisé en ce que** lors de l'étape (110) de calcul du mouvement global ($Mvt_{global}$), le mouvement global ($Mvt_{global}$) est déterminé comme une estimation moyenne pondérée des mouvements des séquences d'images.

**5.** Procédé selon l'une quelconque des revendications précédentes, **caractérisé en ce que** lors de l'étape (110) de calcul du mouvement résiduel ($\Delta Mvt_i$), le mouvement résiduel ($\Delta Mvt_i$) est calculé comme la différence entre le mouvement propre ($Mvt_i$) et le mouvement global ($Mvt_{global}$).

**6.** Dispositif de compensation sur plusieurs séquences d'images d'une même scène, du mouvement différentiel entre plusieurs caméras soumises à un même mouvement global par rapport à la scène, dans lequel le dispositif comprend :

  - des moyens pour prendre plusieurs séquences d'images brutes d'une même scène,
  - des moyens pour calculer un mouvement propre ($Mvt_i$) à chaque séquence d'images par rapport à la caméra le produisant,
  - des moyens pour calculer un mouvement global ($Mvt_{global}$) pour les caméras à partir des séquences d'images,
  - des moyens pour calculer un mouvement résiduel ($\Delta Mvt_i$) pour chaque caméra à partir du mouvement propre ($Mvt_i$) et du mouvement global ($Mvt_{global}$), et
  - des moyens pour corriger chaque séquence d'images du mouvement résiduel ($\Delta Mvt_i$) par rapport à la caméra ayant pris les images.

**7.** Dispositif selon la revendication 6, **caractérisé en ce qu'**il comporte des moyens de stabilisation image par image de chaque séquence d'images pour compenser des mouvements parasites des images et des moyens de stabilisation des images lors de la correction du mouvement résiduel.

**8.** Dispositif selon la revendication 7, **caractérisé en ce que** les moyens de stabilisation sont mis en oeuvre sur les séquences d'images brutes avant le calcul du mouvement global ($Mvt_{global}$) et des mouvements résiduels ($\Delta Mvt_i$), les calculs étant mis en oeuvre sur des images stabilisées.

**9.** Dispositif selon l'une quelconque des revendications précédentes, caractérisé en ce les moyens de calcul du mouvement global ($Mvt_{global}$) sont propres à déterminer le mouvement global ($Mvt_{global}$) comme une estimation moyenne pondérée des mouvements des séquences d'images.

**10.** Dispositif selon l'une quelconque des revendications précédentes, **caractérisé en ce que** les moyens de calcul du mouvement résiduel ($\Delta Mvt_i$) sont propres à déterminer le mouvement résiduel ($\Delta Mvt_i$) comme la différence entre le mouvement propre ($Mvt_i$) et le mouvement global ($Mvt_{global}$).

FIG.1

FIG.2

10

12A

12B

22A

22B

## FIG.3

30A

30B

## FIG.5

FIG.4